# EUROPEAN PATENT APPLICATION

(11) **EP 1 761 096 A1**
(43) Date of publication of application: **07.03.2007**
(21) Application number: 06015361.6
(22) Date of filing: 24.07.2006
(51) Int. Cl.: H04Q 7/38

(54) **System and method providing connection point and communication profile management**

(30) Priority: 01.09.2005 US 217645; 28.11.2005 US 740186 P; 08.06.2006 US 423072
(71) Applicant: Broadcom Corporation, Irvine, CA 92618-7013 (US)
(72) Inventor: Bennett, James D., 36001 Karlovy Vary (CZ); Karaoguz, Jeyhan, 92606 Irvine, CA (US)
(74) Representative: Jehle, Volker Armin

(57) **Abstract**

A system and method providing connection point and communication profile management in a communication system. Various aspects of the present invention may provide a communication device (*e.g*., a multimode wireless communication device) comprising a display. One or more connection points (*e.g*., wireless access points or devices) may be determined, and visual indications of the determined connection points may be presented on the display. A user interface of the communication device may, for example, be adapted to receive a user input associated with a selection of a presented connection point, and the communication device may perform an action based on the connection point selection. For example and without limitation, the communication device may establish a communication link with the selected connection point or present additional information related to the selected connection point.

## Description

### [CROSS-REFERENCE TO RELATED APPLICATIONS/INCORPORATION BY REFERENCE]

The present application is related to and claims priority from U.S. Provisional Patent Application serial number 60/740,186, with attorney docket number 16866US01, filed November 28, 2005, and titled "SYSTEM AND METHOD PROVIDING CONNECTION POINT AND COMMUNICATION PROFILE MANAGEMENT," the contents of which are hereby incorporated herein by reference in their entirety.

The present application is also related to U.S. patent application serial no. 11/217,645, entitled "MULTIMEDIA COMMUNICATION DEVICE WITH CONFIGURATION UPDATE CAPABILITY," filed Sept. 1, 2005, and U.S. patent application serial no. / , , entitled "PROGRAMMABLE WIRELESS ACCESS POINT SUPPORTING CONFIGURATION PROFILE UPDATING," filed concurrently herewith, with attorney docket number 16864US02, each of which are hereby incorporated herein in their entirety by reference.

### [FEDERALLY SPONSORED RESEARCH OR DEVELOPMENT]

[Not Applicable]

### [SEQUENCE LISTING]

[Not Applicable]

### [MICROFICHE/COPYRIGHT REFERENCE]

[Not Applicable]

### BACKGROUND OF THE INVENTION

Communication devices (e.g., mobile communication devices) are continually increasing in popularity. Such communication devices include, for example and without limitation, cellular phones, paging devices, portable email devices, and personal digital assistants. Mobile communication devices, for example, provide the user with the capability to conduct communications while moving through a variety of environments.

Mobile communication devices may operate in accordance with multiple communication modes. For example a mobile communication device may be adapted to operate in a cellular communication mode and a wireless computer network communication mode. Such multimode mobile communication devices may utilize respective radio configurations for each communication mode. For example, various communication modes may correspond to different respective radios and/or different communication protocols.

As mobile communication devices increase in popularity, communication networks providing communication links to such mobile communication devices and various electronic devices providing services to such mobile communication devices are also increasing in popularity. The increase in communication network and device availability provides an increasing number of communication options to mobile communication devices. In addition, as mobile communication devices move between environments, the array of communication networks available to the mobile communication devices changes.

As the number of mobile communication devices and/or communication networks or other devices increases, the complexity of establishing and maintaining communication links between mobile communication devices and communication networks or other devices also increases. Such increased complexity, in turn, may result in user confusion, ergonomically unfriendly communication devices, increased power consumption, increased cost, etc. Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention comprise a system and method providing connection point and communication profile management in a communication system, substantially as shown in and/or described in connection with at least one of the figures, as set forth more completely in the claims.
According to an aspect of the invention, a multimode communication device is provided comprising:
a display;
at least one module adapted to:
   determine available connection points; and
   present a visual indication of the determined connection points on the
display; and
a user interface adapted to receive a user input associated with a selection of a presented connection point.
Advantageously, the at least one module is further adapted to:
re-determine available connection points in response to an event; and
present an updated visual indication of the re-determined connection points.
Advantageously, the visual indication of the determined connection points indicates one or more connection point characteristics.
Advantageously, the visual indication of the determined connection points indicates whether the multimode communication device is at least one of:
presently communicatively coupled to the determined connection points; and
presently attempting to establish a communication link with the determined connection points.
Advantageously, the visual indication of the determined connection points indicates whether the multimode communication device is presently capable of communicating with the determined connection points.
Advantageously, the visual indication of the determined connection points indicates communication link quality associated with the determined connection points.
Advantageously, the visual indication of the determined connection points indicates data rate associated with the determined connection points.
Advantageously, the visual indication of the determined connection points comprises color-coding to indicate one or more connection point characteristics.
Advantageously, the visual indication of the determined connection points comprises an ordered listing of the determined connection points, wherein the order is indicative of one or more connection point characteristics.
Advantageously, the visual indication of the determined connection points comprises a graphical indicium to indicate one or more connection point characteristics.
Advantageously, the at least one module is further adapted to, in response to the received user input, attempt to establish a communication link between the multimode communication device and the selected connection point.
Advantageously, the at least one module is further adapted to, in response to the received user input, present information associated with the selected connection point on the display.
Advantageously, the presented information comprises a list of communication protocols associated with the selected connection point.
Advantageously, the presented information comprises a level of communication link quality associated with the selected connection point.
Advantageously, the presented information comprises one or more actions associated with the selected connection point.
Advantageously:
the at least one module is further adapted to:
   determine communication protocols associated with a connection point; and
   present a visual indication of the determined communication protocols on the display; and
the user interface is further adapted to receive a user input associated with a selection of a presented communication protocol.
Advantageously, the at least one module is further adapted to, in response to the received user input, present a visual indication of communication protocols associated with the selected connection point on the display.
Advantageously, a visual indication of a determined communication protocol indicates one or more characteristics of the determined communication protocol.
Advantageously, the visual indication of a determined communication protocol indicates data rate associated with the determined communication protocol.
Advantageously, the visual indication of the determined communication protocols comprises an ordered listing of the determined communication protocols, wherein the order is indicative of one or more communication protocol characteristics.
Advantageously, the at least one module is further adapted to, in response to the received user input associated with a selection of a presented communication protocol, attempt to establish a communication link utilizing the selected communication protocol.
Advantageously, the at least one module is further adapted to, in response to the received user input associated with a selection of a presented communication protocol, present information associated with the selected communication protocol on the display.
Advantageously, the presented information comprises one or more actions associated with the selected communication protocol.
According to an aspect of the invention, a method for managing communication of a multimode communication device is provided, the method comprising:
determining connection points available for communication with the multimode communication device;
presenting a visual indication of the determined connection points on a display; and
receiving user input associated with a selection of a presented connection point.
Advantageously, the visual indication of a determined connection point indicates one or more connection point characteristics.
Advantageously, the method further comprises, in response to the received user input, attempting to establish a communication link between the multimode communication device and the selected connection point.
Advantageously, the method further comprises, in response to the received user input, presenting information associated with the selected connection point on the display.
Advantageously, the presented information comprises a list of communication protocols associated with the selected connection point.
Advantageously, the presented information comprises an indication of communication link quality associated with the selected connection point.
Advantageously, the presented information comprises an indication of an action for the multimode communication device to perform with regard to the selected connection point.
Advantageously, the method further comprises:
determining communication protocols associated with a connection point;
presenting a visual indication of the determined communication protocols on the display; and
receiving user input associated with a selection of a presented communication protocol.
Advantageously, the method further comprises, in response to the received user input associated with a selection of a presented connection point, presenting a visual indication of communication protocols associated with the selected connection point on the display.
Advantageously, the method further comprises, in response to the received input associated with a selection of a presented communication protocol, attempting to establish a communication link utilizing the selected communication protocol.
Advantageously, the method further comprises, in response to the received input associated with a selection of a presented communication protocol, presenting information associated with the selected communication protocol on the display.
These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 is a diagram showing a non-limiting exemplary connection environment for a wireless communication device.

Figure 2 is a diagram illustrating a portion of a first exemplary communication system, in accordance with various aspects of the present invention.

Figure 3 is a diagram showing a first non-limiting exemplary multimode communication device user interface, in accordance with various aspects of the present invention.

Figure 4 is a diagram showing a second non-limiting exemplary multimode communication device user interface, in accordance with various aspects of the present invention.

Figure 5 is a diagram illustrating a portion of a second exemplary communication system, in accordance with various aspects of the present invention.

Figure 6 is a diagram illustrating a first exemplary method for managing connectivity of a multimode communication system, in accordance with various aspects of the present invention.

Figure 7 is a diagram illustrating a second exemplary method for managing connectivity of a multimode communication system, in accordance with various aspects of the present invention.

Figure 8 is a diagram illustrating a third exemplary method for managing connectivity of a multimode communication system, in accordance with various aspects of the present invention.

### DETAILED DESCRIPTION OF THE INVENTION

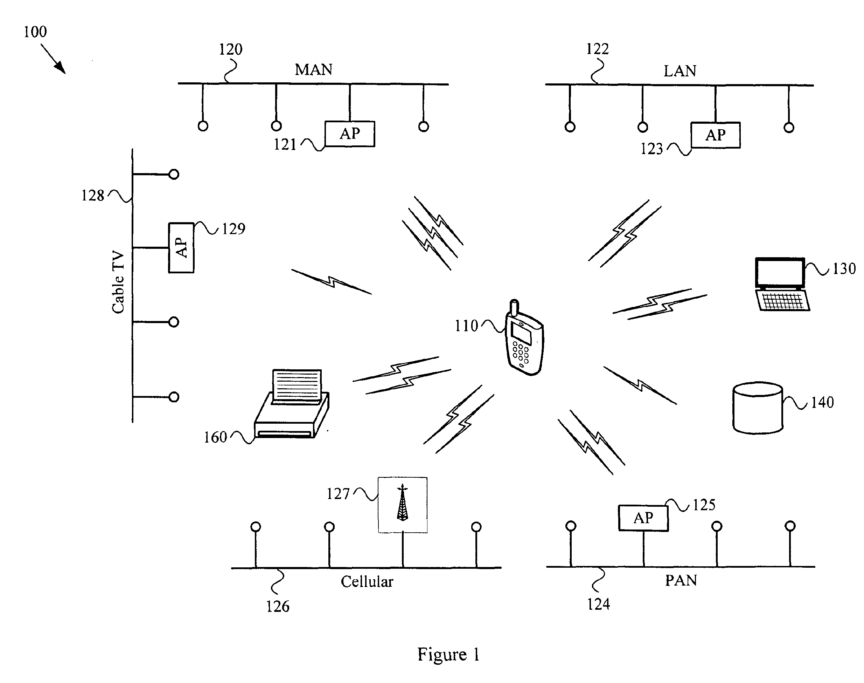

Figure 1 is a diagram showing a non-limiting exemplary connection environment 100 for a wireless communication device. The wireless communication device (or system) may comprise characteristics of any of a variety of wireless communication devices (e.g., multimode wireless communication devices). For example and without limitation, the wireless communication device may comprise characteristics of any of a variety of mobile wireless communication devices (e.g., cellular phones, paging devices, portable email devices, etc.). Also for example, the wireless communication device may comprise characteristics of fixed communication systems or devices (e.g., network access points, base stations, satellites, wireless routers, set top boxes, etc.). Further for example, the wireless communication device may comprise characteristics of a variety of electronic devices with wireless communication capability (e.g., televisions, music players, cameras, remote controls, personal digital assistants, handheld computers, mobile gaming devices, etc.) Accordingly, the scope of various aspects of the present invention should not be limited by characteristics of particular communication systems or devices.

The following discussion will, at times, refer to various communication modes. A multimode communication device may, for example, be adapted to communicate in a plurality of such communication modes. For the following discussion, a communication mode may generally be considered to coincide with communication utilizing a particular communication protocol or standard. A non-limiting list of exemplary communication protocols includes various cellular communication protocols (e.g., GSM, GPRS, EDGE, CDMA, WCDMA, TDMA, PDC, etc.), various wireless networking protocols or standards, including WLAN, WMAN, WPAN and WWAN (e.g., IEEE 802.11, Bluetooth, IEEE 802.15, UWB, IEEE 802.16, IEEE 802.20, Zigbee, any WiFi protocol, etc.), various television communication standards, etc. The scope of various aspects of the present invention should not be limited by characteristics of particular communication modes or protocols, whether standard or proprietary.

The exemplary communication environment 100 comprises a wireless multimode communication device 110. The exemplary communication environment 100 also comprises a plurality of communication networks and associated network access points. For example, the exemplary communication environment 100 comprises a metropolitan area network ("MAN") 120 and associated MAN access point 121, a local area network ("LAN") 122 and associated LAN access point 123, a personal area network ("PAN") 124 and associated PAN access point 125, a cellular network 126 and associated access point 127 *(e.g.,* a "base station"), and a cable television network 128 and associated access point 129 (e.g., a set top box). The exemplary communication environment 100 may also comprise any of a variety of electronic devices having wireless communication capability. Such devices may include, for example, a computer 130, a memory device 140 and a printer 160. The following discussion will generally refer to electronic devices (stand-alone or networked) with which a communication device might communicate as "connection points." For example, a communication network access point, a computer and a printer with which a communication device may communicate will be referred to generally as "connection points."

Various network access and electronic devices of the exemplary communication environment 100 may be capable of communicating in a plurality of respective communication modes. Such communication modes are, in Figure 1, represented graphically by the illustrated wireless signals. In the non-limiting exemplary communication environment 100, the MAN access point 121 is capable of communicating in three communication modes (e.g., IEEE 802.16, IEEE 802.20 and IEEE 802.11), the LAN access point 123 is capable of communicating in two communication modes (e.g., IEEE 802.11 and Bluetooth), the PAN access point 125 is capable of communicating in two communication modes (e.g., IEEE 802.15 and ultrawideband "UWB"), the cellular network access point 127 is capable of communicating in two communication modes (e.g., GSM and CDMA), and the cable television network access point 129 is capable of communicating in one communication mode (e.g., IEEE 802.15). Also, in the exemplary communication environment 100, the computer 130 is capable of communicating in two communication modes (e.g., IEEE 802.11 and IEEE 802.15), the memory device 140 is capable of communicating in one communication mode (e.g., IEEE 802.16), and the printer is capable of communicating in two communication modes (e.g., Bluetooth and IEEE 802.11).

The wireless multimode communication device 110 may, for example, be presently capable of communicating in any of the previously mentioned communication modes. The communication device 110 may also, for example and without limitation, be configurable to communicate in any of the previously mentioned communication modes.

The following discussion may, at times, refer to the exemplary communication environment 100. Such referral is for illustrative purposes only and should not, in any way, limit the scope of various aspects of the present invention.

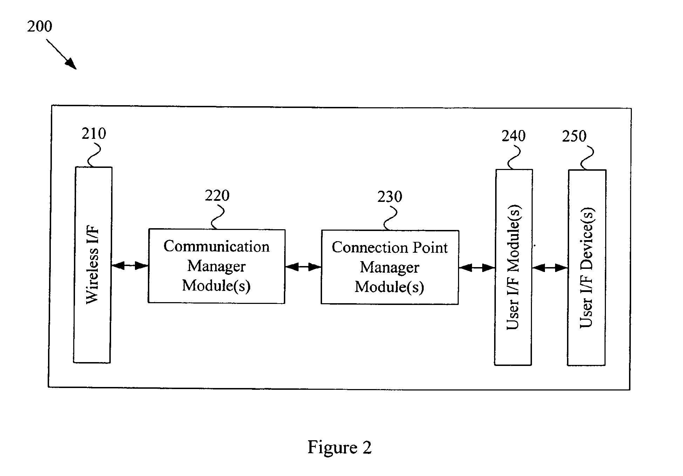

Figure 2 is a diagram illustrating a portion of a first exemplary communication system 200, in accordance with various aspects of the present invention. The first exemplary communication system 200 may, for example and without limitation, share any or all characteristics with the exemplary wireless multimode communication device 110 illustrated in Figure 1 and discussed previously.

The exemplary communication system 200 may comprise a wireless interface 210. The wireless interface 210 may comprise characteristics of any of a variety of wireless interface hardware and/or software. For example, the wireless interface 210 may comprise a plurality of radios dedicated to communicating in respective communication modes associated with respective communication protocols and/or standards. Also for example, the wireless interface 210 may comprise one or more programmable radios that are programmable to communicate in any of a plurality of communication modes, depending on the programming.

For example, the communication device 200 may be capable of downloading communication configuration information (or profiles) corresponding to particular operating modes. Such downloading and operation are exemplified in a non-limiting manner in U.S. patent application serial no. 11/217,645, entitled "MULTIMEDIA COMMUNICATION DEVICE WITH CONFIGURATION UPDATE CAPABILITY," filed Sept. 1, 2005, and U.S. patent application serial no. / , , entitled "PROGRAMMABLE WIRELESS ACCESS POINT SUPPORTING CONFIGURATION PROFILE UPDATING," filed , with attorney docket number 16864US01, which are hereby incorporated herein in their entirety by reference.

The exemplary communication system 200 may also comprise one or more communication manager module(s) 220 ("communication manager 220"), which are generally adapted to manage communications between the communication system 200 and other connection points (e.g., network access points, electronic devices with wireless communication capability, etc.). The communication manager 220 may, for example, utilize the wireless interface 210 to perform such communication. Also, the communication manager 220 may, for example, manage such communication in accordance with information obtained from the connection point manager module(s) 230, discussed below. Such information may, for example, comprise information pertaining to various connection points, protocols associated with such connection points, etc.

The exemplary communication system 200 may further comprise one or more user interface modules 240 and associated user interface devices 250. The user interface module(s) 240 and associated user interface device(s) 250 may generally be adapted to provide a communication link between the communication system 200 and a user of the communication system 200. For example and without limitation, the user interface module(s) 240 and associated user interface device(s) 250 may comprise interface hardware and/or software to communicate with a user using a video display, touch screen, camera, speaker, microphone, keypad, mouse, trackball, thumbwheel, touch pad, vibrating output, etc. In general, the user interface module(s) 240 and associated device(s) 250 may comprise characteristics of any of a variety of user interface modules and associated user interface devices. Accordingly, the scope of various aspects of the present invention should not be limited by characteristics of any particular type of user interface module or associated user interface device.

As exemplified in non-limiting exemplary scenarios, which will be discussed later, the user interface device(s) 250 may comprise an output display, and the user interface module(s) 240 may comprise a display driver for driving the output display. The exemplary communication device 200 may, for example, utilize the display driver and display to present various visual indicia related to connection points and/or communication modes (*e.g.,* protocols or other characteristics). Additionally, as exemplified in non-limiting exemplary scenarios, which will be discussed later, the user interface module(s)/device(s) may comprise a user input device (e.g., a keypad, cursor controller, etc.). The exemplary communication device 200 may, for example, utilize the user input module(s)/device(s) to receive user input associated with selection of a connection point and/or communication mode or protocol.

The exemplary communication system 200 may also comprise one or more connection point manager module(s) 230 adapted to generally manage the manner in which the communication system 200 communicates with various connection points. The connection point manager module(s) 230 ("CP manager 230") may, for example, utilize the user interface module(s) 240 and/or device(s) 250 to interact with a user regarding various connection points and regarding communication with such connection points. The following discussion will provide various non-limiting examples of such user interaction.

The CP manager 230 may, for example, be adapted to determine available connection points. The CP manager 230 may be adapted to determine such available connection points in any of a variety of manners. For example and without limitation, the CP manager 230 may utilize the communication manager 220 and/or wireless interface 210 to listen for beacons or other signals associated with various connection points that are in-range of the communication system 200. Also for example, the CP manager 230 may utilize the communication manager 220 and/or wireless interface 210 to transmit beacon signals and listen for response signals from various connection points that are in-range of the communication system 200. Further for example, the CP manager 230 may obtain and analyze information stored in memory (on-board or remote) to determine connection points that are (or should be) available at a particular location.

The CP manager 230 may, for example, be adapted to determine various types of information (e.g., communication mode/protocol information) associated with the connection points. The CP manager 230 may be adapted to determine such connection point information in any of a variety of manners. For example and without limitation, the CP manager 230 may be adapted to communicate with a connection point using a first protocol and, through such communication, receive information from the connection point indicating which communication modes/protocols the connection point is compatible with. As another example, the CP manager module 230 may interface with local or remote memory to obtain previously stored information relating to the connection point and communication modes/protocols associated therewith. As a further example, the CP manager 230 may be adapted to interact with a user or system administrator to determine information regarding various communication modes/protocols associated with a connection point.

In general, the CP manager 230 may be adapted to determine available communication points and to determine various characteristics of the connection points (e.g., associated communication modes/protocols). Accordingly, the scope of various aspects of the present invention should not be limited by characteristics of any particular manner of determining connection point information.

The CP manager module 230 may, for example, be adapted to present a visual indication of the determined connection points on a display (e.g., utilizing the user interface module(s) 240 and user interface device(s) 250).

The visual indication may, for example, comprise a list of one or more determined connection points. The list may, for example, be ordered in accordance with any of a variety of criteria. For example and without limitation, the list of connection points may be ordered in accordance with a predetermined or user-defined ordering. Also for example, the list of connection points may be ordered according to data rate, actual or expected communication link quality, signal strength, cost, expected or actually power consumption, which connection point(s) are default connection points, whether the communication device 200 is presently capable of communicating with the connection point, whether the communication device 200 is configurable to be capable of communicating with the connection point, or any of a variety of connection point characteristics.

The visual indication of the determined connection points may comprise visual indications (*e.g.,* graphical, textual or otherwise) of any of a variety of connection point characteristics. For example, the visual indication of the determined connection points may comprise visual indications of connection point characteristics for each connection point on a list of connection points. The following examples will provide non-limiting examples of various connection point characteristics, visual indications of which may be presented on a display.

For example, the visual indication of the determined connection point(s) may indicate whether the communication system 200 is presently communicatively coupled to the determined connection point(s). Such a visual indication may also indicate, for example, various information regarding existing communication links (e.g., connection status, data rate, cost, etc.). Also for example, the visual indication of the determined connection point(s) may indicate whether the communication system 200 is presently attempting to establish a communication link with the determined connection point(s). Such a visual indication may also indicate, for example, various information regarding a present attempt to establish a communication link (e.g., connection status, stage of connection establishment, issues regarding the connection attempt, etc.).

Additionally, for example, the visual indication of the determined connection point(s) may indicate whether the communication system 200 is presently capable of communicating with the determined connection point(s). For example, the visual indication may indicate whether the communication system 200 includes the necessary hardware and/or software to communicate with the determined connection point.

Further for example, the visual indication of the determined connection point(s) may indicate whether the communication system 200 is presently configurable to be capable of communicating with the determined connection point(s). In a non-limiting exemplary scenario where the communication system 200 is programmable or otherwise configurable, the visual indication may indicate whether the communication system 200 would be able to communicate with the connection point(s) if provided particular configuration information.

Still further for example, the visual indication of the determined connection point(s) may indicate a communication link quality associated with the determined connection point(s) (e.g., actual and/or expected link quality). Such quality may, for example and without limitation, comprise any of a variety of communication link quality characteristics. For example and without limitation, the visual indication may indicate data rate, error rate, S/N ratio, signal strength, security level, or any or a variety of singular or aggregate metrics associated with communication link quality.

Also for example, the visual indication of the determined connection point(s) may indicate one or more monetary costs associated with the connection point. For example, the connection point may be associated with a previously paid flat fee or may have a monetary cost based on total amount of information transmitted, connection time, or quality of service.

Further for example, the visual indication of the determined connection point(s) may indicate a level of power consumption for the communication system 200 associated with communication with the determined connection point. For example, communication with a first connection point may correspond to relatively high power consumption, and communication with a second connection point may correspond to relatively low power consumption.

Still further for example, the visual indication of the determined connection point(s) may indicate a level associated with an aggregate metric. Such an aggregate metric may, for example, be based on a plurality of connection point characteristics (*e.g.,* cost, data rate, power consumption, etc.). Such an aggregate metric may, for example, be defined by a user, system administrator or communication device manufacturer.

In general, the visual indication of the determined connection point(s) may indicate any of a large variety of connection point characteristics. Accordingly, the scope of various aspects of the present invention should not be limited by any particular connection point characteristics or related indicia.

As mentioned previously, the visual indications of the determined connection points, or characteristics thereof, may be graphical, textual or otherwise. The following discussion will present non-limiting examples of such visual indications.

For example and without limitation, the visual indication of the determined connection point(s) may comprise color indicative of one or more connection point characteristics. As a non-limiting example, an indication of a connection point may be green when the communication system 200 is currently communicatively coupled to the connection point, yellow when the communication system 200 is presently attempting to establish a communication link with the connection point, and red when the communication system 200 is not presently capable of communicating with the connection point. As another example, an indication of a connection point may be blue when the communication system 200 would be capable of communicating with the connection point if the communication system 200 downloads a particular configuration. As a further example, an indication of green may indicate that the connection point has the highest associated data rate or communication link quality, and an indication of red may indicate that the connection point has the lowest associated data rate or communication link quality.

Similar to the color-coding discussed above, the visual indication of the determined connection point(s) may comprise shading and/or brightness indicative of one or more connection point characteristics. As a non-limiting example, an indication of a connection point may turn grey to indicate that a connection point is no longer available, and the indication may turn black (or disappear) to indicate that a connection point has been unavailable for longer than some period of time. In another example, an indication of a connection point may be relatively bright to indicate relatively cost-efficient data transfer and relatively dim to indicate relatively cost-inefficient data transfer.

For another example, the visual indication of the determined connection point(s) may comprise various graphical indicia to indicate one or more connection point characteristics. Such graphical indicia may comprise characteristics of any of a variety of graphical features. For example and without limitation, a visual indication of a connection point may be highlighted to indicate selection by a user or to indicate that the communication system 200 is presently communicatively coupled to the access point. Also for example, the visual indication of a connection point may comprise a bar graph to indicate data rate. Further for example, the visual indication may comprise flashing text to indicate a connection attempt in progress or bold/enlarged text font to indicate that the connection point is the preferred or default connection point. Other graphical indications may comprise, without limitation, animation features, graphical texture features, particular graphical icons correspond to particular connection point characteristics, etc.

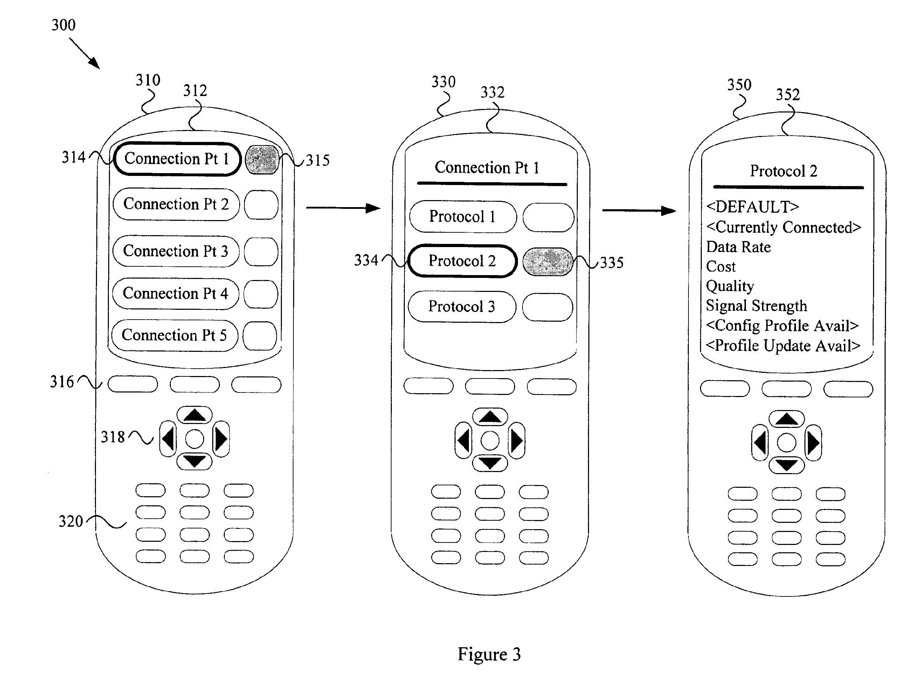

For additional examples of visual indications, refer to Figure 3, which is a diagram showing a first non-limiting exemplary multimode communication device 300 user interface, in accordance with various aspects of the present invention. The exemplary multimode communication device 300 may share any or all characteristics with the exemplary communication systems 110, 200 illustrated in Figures 1-2 and discussed previously.

The first view 310 of the exemplary communication device 300 illustrates a display 312 comprising a list of connection points. As an example, the first connection point indication 314 is at the top of the list of connection points (e.g., to indicate that the first connection point is the most common connection point) and highlighted (*e.g.,* to indicate that the communication device 300 is presently communicatively coupled to the first connection point. The visual indication of the first connection point 314 also comprises a graphical portion 315 (*e.g.,* showing a present and/or anticipated data transfer rate associated with the first connection point).

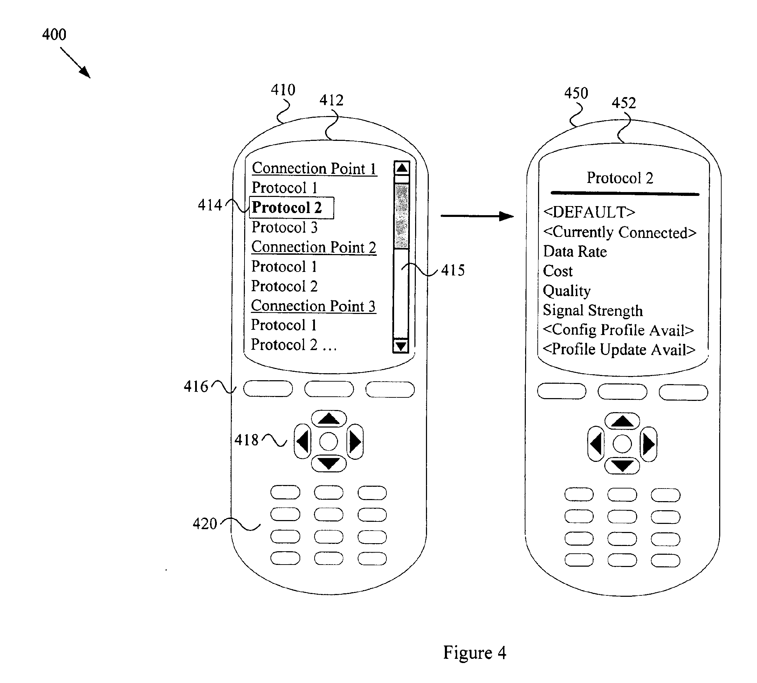

For still further examples of visual indications, refer Figure 4, which is a diagram showing a second non-limiting exemplary multimode communication device 400 user interface, in accordance with various aspects of the present invention. The exemplary multimode communication device 400 may share any or all characteristics with the exemplary communication systems/devices 110, 200, 300 illustrated in Figures 1-3 and discussed previously.

The first view 410 of the exemplary communication device 400 illustrates a display 412 comprising a list of connection points and respective protocol information for each listed connection point. As an example, the second protocol of the first connection point is highlighted with shading (e.g., to indicate user selection of the second protocol) and printed in bold font (e.g., as a visual indication that the communication device 400 is currently communicatively coupled to the first connection point utilizing the second protocol). Note that the connection point list on the display 412 comprises a scroll bar 415 providing the user the ability to scroll through the displayed connection point information.

Referring back to Figure 2, as discussed previously, the communication system 200 may comprise various user interface module(s) 240 and/or user interface device(s) 250. Such modules/devices may, for example, be adapted to receive a user input associated with a selection of a presented connection point (e.g., as presented on a display device). The user interface module(s) 240 and/or user interface device(s) 250 may be adapted to receive any of a variety of types of user inputs associated with such a selection.

For example and without limitation, the user interface module(s) 240 and/or user interface device(s) 250 may be adapted to receive input from a user, where such input corresponds to the user highlighting and selecting a connection point presented on a display. Such highlighting and selecting may, for example, correspond to scrolling with arrow keys or a scroll bar and selecting with a selection button. Such user input may, for example, correspond to a user utilizing a touch screen and touching a visual indication associated with a connection point to select the connection point. Such user input may further, for example, correspond to moving a cursor over a visual indication (e.g., using a trackball, touch pad, mouse, arrow keys, etc.) associated with a particular connection point and entering a key press to indicate selection of the connection point.

In response to a user input associated with a selection of a presented connection point, the communication system 200 (e.g., the CP manager 230) may attempt to establish a communication link (*e.g.,* utilizing the communication manager 220 and wireless interface 210) between the communication system 200 and the selected connection point. The communication system 200 may attempt to establish such a communication link in any of a variety of manners.

For example and without limitation, the CP manager 230 may direct the communication manager 220 to utilize a default communication protocol associated with the selected connection point. Also for example, the CP manager 230 may direct the communication manager 220 to traverse an ordered list of communication protocols associated with the selected connection point, attempting to establish the communication link utilizing each protocol until the communication link is established. Further for example, the CP manager 230 may utilize the user interface module(s) 240 and user interface device(s) 250 to obtain user approval prior to the establishment of the communication link. Still further for example, the CP manager 230 may utilize the user interface module(s) 240 and user interface device(s) 250 to obtain account and/or password information from the user for utilization during the establishment of the communication link.

Alternatively, in response to a user input associated with a selection of a presented connection point, the communication system 200 (e.g., the CP manager 230) may present various information associated with the selected connection point on a display (e.g., utilizing the user interface module(s) 240 and/or user interface device(s) 250).

The information associated with the selected connection point may comprise any of a variety of types of connection point information, various examples of which were presented previously. For example and without limitation, the connection point information may comprise a data rate and/or communication link quality associated with the selected connection point. Further for example, the connection point information may comprise a list of communication protocols associated with the connection point. Also for example, the connection point information may comprise an indication of communication link quality, signal strength and/or S/N ratio associated with the selected connection point. Additionally for example, the connection point information may comprise power consumption information associated with the selected connection point. Still further for example, the connection point information may comprise one or more actions associated with the selected communication point (*e.g.,* connect, disconnect, test, make default, organize list, define connection parameters, etc.).

As discussed previously, in various scenarios, the communication system 200 may present information to the user (e.g., on a display device) that is indicative of respective communication protocols associated with one or more connection points.

In a first non-limiting exemplary scenario, the CP manager 230 may determine communication protocols associated with a connection point. As discussed previously, the CP manager 230 may, for example, perform such determination by communicating with the connection point and/or attempting to communicate with the connection point (e.g., utilizing the communication manager 220 and wireless I/F 210). Also for example, the CP manager 230 may perform such determination by analyzing stored information, interfacing with a user, etc. The CP manager 230 may then, for example, present a visual indication of the determined communication protocols on the display (e.g., utilizing the user interface module(s) 240 and/or user interface device(s) 250).

As a non-limiting example, refer to Figure 4. The first view 410 of the exemplary communication device 400 illustrates a display 412 comprising a list of connection points and respective protocol information for each listed connection point.

As another non-limiting example, refer to Figure 3. The first view 310 of the exemplary communication device 300 illustrates a display 312 listing various connections points. In response to a received user input selecting a connection point, the exemplary communication device 300 presents the second view 330 of the communication device 300, which, on the display 332, presents a visual indication of various protocols associated with the first connection point. As with user selection of a connection point, the communication device 300 (e.g., the user interface module(s) 240 and/or user interface device(s) 250) may be adapted to receive a user input associated with a selection of a presented protocol.

As with the connection point information discussed previously, the visual indication of the communication protocols may comprise an ordered listing of the communication protocols. Such ordering may, for example, be in accordance with any of a variety of criteria. For example and without limitation, the list of protocols may be ordered in accordance with a predetermined or user-defined ordering. Also for example, the list of protocols may be ordered according to data rate, actual or expected communication link quality, signal strength, cost, expected or actually power consumption, which protocol(s) are default protocols, whether the communication device 200 is presently capable of communicating utilizing the protocol, or any of a variety of communication protocol characteristics.

The visual indication of the determined protocols may comprise visual indications (e.g., graphical, textual or otherwise) of any of a variety of protocol characteristics. For example, the visual indication of the determined protocols may comprise visual indications of protocol characteristics for each protocol on a list of protocols. The following discussion will provide non-limiting examples of various protocol characteristics, visual indications of which may be presented on a display.

For example, a visual indication of a determined protocol may indicate whether the communication system 200 is presently communicatively coupled to a connection point utilizing the protocol. Such a visual indication may also indicate, for example, various information regarding existing communication links (e.g., connection status, data rate, cost, etc.). Also for example, the visual indication of a determined protocol may indicate whether the communication system 200 is presently attempting to establish a communication link utilizing the determined communication protocol. Such a visual indication may also indicate, for example, various information regarding a present attempt to establish a communication link (e.g., connection status, stage of connection establishment, issues regarding connection attempt, etc.).

Additionally, for example, the visual indication of a determined protocol may indicate whether the communication system 200 is presently capable of communicating utilizing the determined protocol. For example, the visual indication may indicate whether the communication system 200 includes the necessary hardware and/or software to communicate utilizing the determined protocol.

Further for example, the visual indication of a determined protocol may indicate whether the communication system 200 is presently configurable to be capable of communicating utilizing the determined protocol. In a non-limiting exemplary scenario where the communication system 200 is programmable or otherwise configurable, the visual indication may indicate whether the communication system 200 would be able to communicate with the determined protocol if provided particular configuration information.

Still further for example, the visual indication of a determined protocol may indicate a communication link quality associated with the determined protocol (e.g., actual and/or expected link quality). Such quality may, for example and without limitation, comprise any of a variety of communication link quality characteristics. For example and without limitation, the visual indication may indicate data rate, error rate, S/N ratio, signal strength, security level, or any or a variety of singular or aggregate metrics associated with communication link quality.

Also for example, the visual indication of a determined protocol may indicate one or more monetary costs associated with the protocol. For example, the determined protocol may be associated with a previously paid flat fee or may have a monetary cost based on total amount of information transmitted, connection time, or quality of service.

Further for example, the visual indication of a determined protocol may indicate a level of power consumption for the communication system 200 associated with communication utilizing the determined protocol. For example, communication with a particular protocol may correspond to relatively high power consumption, and communication with another protocol may correspond to relatively low power consumption.

Still further for example, the visual indication of a determined protocol may indicate a level associated with an aggregate metric. Such an aggregate metric may, for example, be based on a plurality of protocol characteristics (e.g., cost, data rate, power consumption, etc.). Such an aggregate metric may, for example, be defined by a user, a system administrator or communication device manufacturer.

In general, the visual indication of the determined protocol(s) may indicate any of a large variety of protocol characteristics. Accordingly, the scope of various aspects of the present invention should not be limited by any particular protocol characteristics or related indicia.

As mentioned previously, the visual indications of the determined protocol(s), or characteristics thereof, may be graphical, textual or otherwise. The following discussion will present non-limiting examples of such visual indications.

For example and without limitation, the visual indication of the determined protocol(s) may comprise color indicative of one or more protocol characteristics. As a non-limiting example, an indication of a protocol may be green when the communication system 200 is currently communicatively coupled to an associated connection point utilizing the protocol, yellow when the communication system 200 is presently attempting to establish a communication link with the associated connection point utilizing the protocol, and red when the communication system 200 is not presently capable of communicating utilizing the protocol. As another example, an indication of a protocol may be blue when the communication system 200 would be capable of communicating utilizing the protocol if the communication system 200 downloads a particular configuration. As a further example, an indication of green may indicate that the protocol has the highest associated data rate or communication link quality, and an indication of red may indicate that the protocol has the lowest associated data rate or communication link quality.

Similar to the color-coding discussed above, the visual indication of the determined protocol(s) may comprise shading and/or brightness indicative of one or more protocol characteristics. As a non-limiting example, an indication of a connection point may turn grey to indicate that communicating with a protocol is no longer possible, and the indication may turn black (or disappear) to indicate that communicating with the protocol has not been possible for longer than some period of time. In another example, an indication of a protocol may be relatively bright to indicate relatively cost-efficient data transfer and relatively dim to indicate relatively cost-inefficient data transfer.

For another example, the visual indication of the determined protocol(s) may comprise various graphical indicia to indicate one or more protocol characteristics. Such graphical indicia may comprise characteristics of any of a variety of graphical features. For example and without limitation, a visual indication of a protocol may be highlighted to indicate selection by a user or to indicate that the communication system 200 is presently communicatively coupled to a connection point utilizing the protocol. Also for example, the visual indication of a connection point may comprise a bar graph to indicate data rate. Further for example, the visual indication may comprise flashing text to indicate a connection attempt in progress or bold/enlarged text font to indicate that the protocol is the preferred or default protocol. Other graphical indications may comprise, without limitation, animation features, graphical texture features, particular graphical icons correspond to particular protocol characteristics, etc.

For additional examples of visual indications, refer to Figure 3, which is a diagram showing a first non-limiting exemplary multimode communication device 300 user interface, in accordance with various aspects of the present invention. The second view 330 of the exemplary communication device 300 illustrates a second display 332 comprising a list of protocols. As an example, the first protocol indication is at the top of the list of protocols (*e.g.,* to indicate that the first protocol is the most common protocol for the first connection point), and the second protocol indication is highlighted (*e.g.*, to indicate that the communication device 300 is presently communicatively coupled to the first connection point utilizing the second protocol. The visual indication of the second protocol 334 also comprises a graphical portion 335 (e.g., showing a present and/or anticipated data transfer rate associated with the second protocol).

The third view 350 of the communication device 300 illustrates a third display 352 comprising a list of protocol characteristics (e.g., communication link characteristics) associated with the second protocol. As a non-limiting example, selection of the second protocol 334 in the second view 330 may result in the communication device 300 changing to the third view 350 to present visual indications of various protocol-related information to a user on the third display 352.

For still further examples of visual indications, refer Figure 4, which is a diagram showing a second non-limiting exemplary multimode communication device 400 user interface, in accordance with various aspects of the present invention. The first view 410 of the exemplary communication device 400 illustrates a display 412 comprising a list of connection points and respective protocol information for each listed connection point. As an example, the second protocol of the first connection point is highlighted with shading (e.g., to indicate user selection of the second protocol) and printed in bold font (e.g., as a visual indication that the communication device 400 is currently communicatively coupled to the first connection point utilizing the second protocol). While presenting the first view 410, selection of the second protocol 414 by a user may cause the communication system 400 to present the second view 450, which presents a display 452 comprising a list of protocol characteristics (e.g., communication link characteristics) associated with the second protocol.

As discussed previously, the communication system 200 may comprise various user interface module(s) 240 and/or user interface device(s) 250. Such modules/devices may, for example, be adapted to receive a user input associated with a selection of a presented protocol (e.g., as presented on a display device). The user interface module(s) 240 and/or user interface device(s) 250 may be adapted to receive any of a variety of types of user inputs associated with such a selection.

For example and without limitation, the user interface module(s) 240 and/or user interface device(s) 250 may be adapted to receive input from a user, where such input corresponds to the user highlighting and selecting a protocol presented on a display. Such highlighting and selecting may, for example, correspond to scrolling with arrow keys or a scroll bar and selecting with a selection button. Such user input may, for example, correspond to a user utilizing a touch screen and touching a visual indication associated with a protocol to select the protocol. Such user input may further, for example, correspond to moving a cursor over a visual indication (e.g., using a trackball, touch pad, mouse, arrow keys, etc.) associated with a particular protocol and entering a key press to indicate selection of the protocol.

In response to a user input associated with a selection of a presented protocol, the communication system 200 (e.g., the CP manager 230) may attempt to establish a communication link (e.g., utilizing the communication manager 220 and wireless interface 210) between the communication system 200 and a selected connection point utilizing the selected protocol. The communication system 200 may attempt to establish such a communication link in any of a variety of manners.

For example and without limitation, the CP manager 230 may direct the communication manager 220 to utilize the selected communication protocol and utilize a default communication protocol associated with the selected connection point as a back-up protocol. Also for example, the CP manager 230 may utilize the user interface module(s) 240 and user interface device(s) 250 to obtain user approval prior to the establishment of the communication link. Still further for example, the CP manager 230 may utilize the user interface module(s) 240 and user interface device(s) 250 to obtain account and/or password information from the user for utilization during the establishment of the communication link.

Alternatively, in response to a user input associated with a selection of a presented protocol, the communication system 200 (e.g., the CP manager 230) may present various information associated with the selected protocol on a display (e.g., utilizing the user interface module(s) 240 and/or user interface device(s) 250).

The information associated with the selected protocol may comprise any of a variety of types of protocol information, various examples of which were presented previously. For example and without limitation, the protocol information may comprise a data rate and/or communication link quality associated with the selected protocol. Also for example, the protocol information may comprise an indication of communication link quality, signal strength and/or S/N ratio associated with the selected protocol. Additionally for example, the protocol information may comprise power consumption information associated with the selected protocol. Still further for example, the protocol information may comprise one or more actions associated with the selected protocol (e.g., connect, disconnect, test, make default, organize list, define connection parameters, etc.).

As discussed previously, in various scenarios, the communication system 200 may present information to the user (e.g., on a display device) that is indicative of respective communication protocols associated with one or more connection points.

In a first non-limiting exemplary scenario, the CP manager 230 may determine communication protocol information associated with a protocol. The CP manager 230 may, for example, perform such determination in any of a variety of manners. For example and without limitation, the CP manager 230 may perform such determination by communicating with the selected connection point and/or attempting to communicate with the connection point utilizing the selected protocol (e.g., utilizing the communication manager 220 and wireless I/F 210). Also for example, the CP manager 230 may perform such determination by analyzing stored information, interfacing with a user, etc. The CP manager 230 may then, for example, present a visual indication of the determined protocol information on the display (e.g., utilizing the user interface module(s) 240 and/or user interface device(s) 250).

As a non-limiting example, refer to Figure 4. The second view 450 of the exemplary communication device 400 illustrates a display 452 comprising a list of protocol characteristics associated with a protocol selected in the first view 410.

As another non-limiting example, refer to Figure 3. The second view 330 of the exemplary communication device 300 illustrates a display 332 listing various protocols associated with a connection point selected in the first view 310. In response to a received user input selecting a protocol in the second view 330, the exemplary communication device 300 presents the third view 350 of the communication device 300, which, on the display 352, presents a visual indication of various protocol characteristics associated with the selected protocol. As with user selection of a connection point, the communication device 300 (e.g., the user interface module(s) 240 and/or user interface device(s) 250) may be adapted to receive a user input associated with a selection of a presented protocol.

As with the protocol information discussed previously, the visual indication of the protocol characteristics may comprise an ordered listing of the protocol characteristics. Such ordering may, for example, be in accordance with any of a variety of criteria. For example and without limitation, the list of protocol characteristics may be ordered in accordance with a predetermined or user-defined ordering. Also for example, the list of protocol characteristics may be ordered according to importance and/or relevance to the user.

In various non-limiting exemplary scenarios, the communication device 200 (e.g., the CP manager 230 working in conjunction with other modules) may be adapted to re-determine available connection points and/or protocols and present an updated visual indication of the re-determined connection points and/or protocols. For example, the CP manager 230 may be adapted to re-determine available connection points and/or protocols in response to any of a variety of events. For example and without limitation, the CP manager 230 may be adapted to re-determine connection points and/or protocols periodically (e.g., in response to expiration of a timer) or in accordance with a time schedule. Also for example, the CP manager 230 may be adapted to re-determine connection points and/or protocols in response to a user request or a detected communication link condition (e.g., a communication link failure or significant degradation). Additionally for example, the CP manager 230 may be adapted to re-determine connection points and/or protocols in response to a detected signal (e.g., a beacon from an unknown communication network access point). Further for example, the CP manager 230 may be adapted to re-determine connection points and/or protocols in response to a change in location of the communication device 200 (e.g., relocation to a geographical location with a different set of connection points).

The exemplary communication systems 200, 300, 400 illustrated in Figures 2-4 were presented to provide non-limiting examples of various aspects of the present invention. Accordingly, the scope of various aspects of the present invention should not be limited by characteristics of the exemplary communication systems 200, 300, 400.

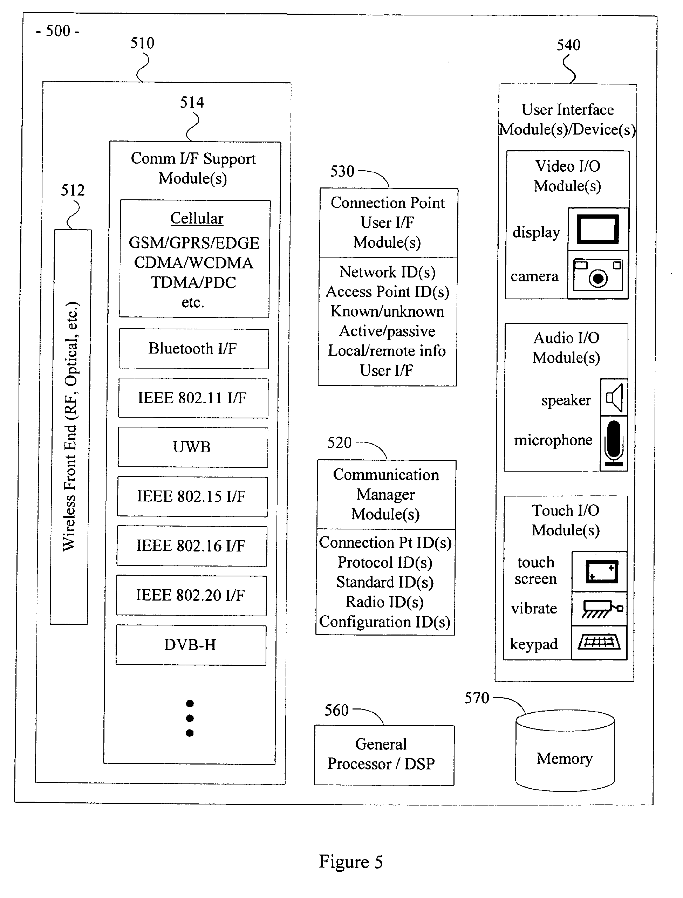

Figure 5 is a diagram illustrating a portion of a second exemplary communication system 500, in accordance with various aspects of the present invention. The exemplary communication system 500 may, for example and without limitation, share any or all characteristics with the exemplary communication systems 110, 200, 300, 400 illustrated in Figures 1-4 and discussed previously.

The exemplary communication system 500 (e.g., a multimode communication device or mobile wireless multimode communication device) may comprise a wireless interface 510, including a wireless front-end 512 and various communication interface support modules 514 corresponding to various communication modes (e.g., protocols and/or standards). The wireless interface 510 may share any or all characteristics with the wireless interface 210 illustrated in Figure 2 and discussed previously.

The wireless front-end 512 may, for example, comprise various components adapted to communicate over an RF interface or non-tethered optical interface. The communication interface support modules 514 may, for example, comprise hardware and/or software modules adapted to communicate in any of a variety of communication modes (e.g., in accordance with various protocols and/or standards). For example and without limitation, the communication interface support modules 514 may comprise hardware and/or software modules adapted to support communication over protocols/standards comprising GSM/GPRS/EDGE, CDMA/WCDMA, TDMA/PDC, Bluetooth, IEEE 802.11, UWB, IEEE 802.15, IEEE 802.16, IEEE 802.20, DVB-H, etc.

The exemplary communication system 500 may also comprise one or more communication manager modules 520, which may share any or all characteristics with the communication manager 220 illustrated in Figure 2 and discussed previously. The exemplary communication system 500 may further comprise one or more connection point manager modules 530, which may share any or all characteristics with the CP manager 230 illustrated in Figure 2 and discussed previously.

The exemplary communication system 500 may, for example, comprise a general processor or digital signal processor 560 and a memory 570. The processor 560 and memory 570 may be adapted to implement various aspects of the present invention with the processor 560 executing software instructions stored in the memory 570. For example and without limitation, the processor 560 may implement a portion of (or all of) the functionality of the communication manager module(s) 520 and/or connection point manager module(s) 530.

The exemplary communication system 500 further includes one or more user interface modules 550, which may share any or all characteristics with the user interface modules 240 and/or user interface devices 250 illustrated in Figure 2 and discussed previously. For example and without limitation, the user interface module(s) 550 may comprise video input/output modules *(e.g.,* a display module, camera module, etc.), audio input/output modules (e.g., a speaker, microphone module, etc.) and/or touch or tactile input/output modules (e.g., a touch screen module, vibratory output module, keypad module, etc.).

The exemplary communication system 500 was presented to provide non-limiting exemplary illustrations of various aspects of the present invention. Accordingly, the scope of various aspects of the present invention should not be limited by characteristics of the exemplary communication system 500.

For illustrative clarity, the exemplary systems 200, 500 illustrated in Figures 2 and 5 were presented in terms of various functional modules. Various modules may, for example, be implemented in hardware, software or a combination thereof. Various modules may, for example, be implemented in a single integrated circuit or combination of integrated circuits. Also, various modules may share various sub-modules and/or subcomponents. For example and without limitation, various hardware modules may share various electrical components, and various software modules may share various software subroutines. Accordingly, the scope of various aspects of the present invention should not be limited by characteristics of any particular hardware and/or software implementation or by any arbitrary boundaries between various functional modules.

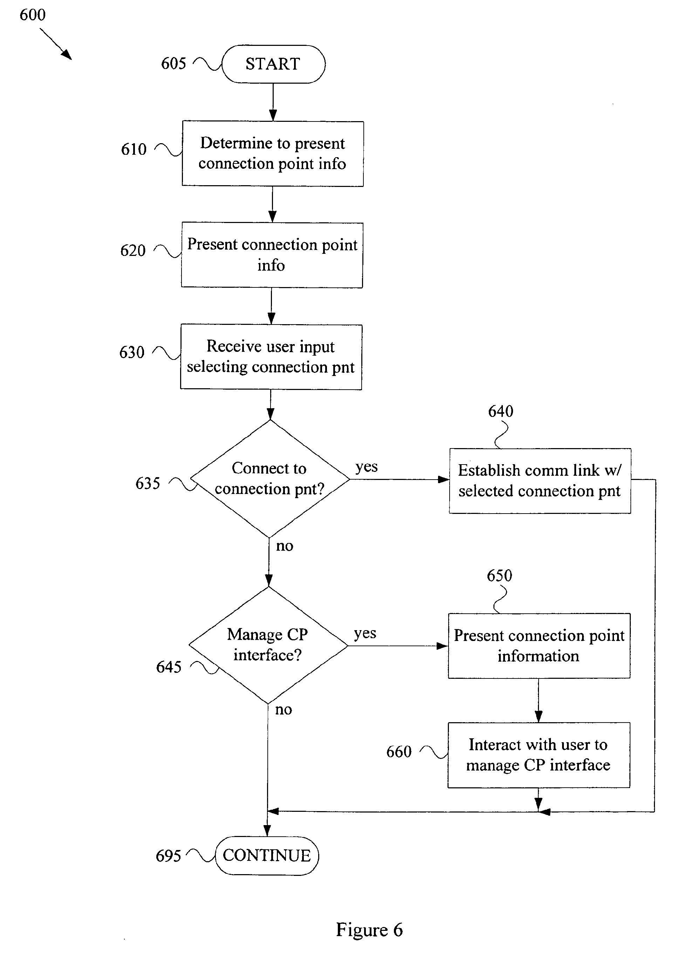

Figure 6 is a diagram illustrating a first exemplary method 600 for managing connectivity of a multimode communication system, in accordance with various aspects of the present invention. The exemplary method 600 may, for example and without limitation, share any or all functional characteristics with the exemplary communication systems 110, 200, 300, 400 and 500 illustrated in Figures 1-5 and discussed previously. The multimode communication system may, as discussed previously, comprise characteristics of any of a variety of wireless communication devices or systems.

The exemplary method 600 may begin executing at step 605. The exemplary method 600 (and all methods discussed herein) may begin executing for any of a variety of reasons. For example and without limitation, the exemplary method 600 may begin executing in response to a user input, a power-up condition or a reset condition. Also for example, the exemplary method 600 may begin executing in response to a detected event (e.g., a timer expiration, detected signal, communication link failure or degradation, system command, etc.). Further for example, the exemplary method 600 may begin executing in response to a schedule, detected change in location, noise conditions, power supply conditions, etc. Accordingly, the scope of various aspects of the present invention should not be limited by characteristics of any particular initiating cause or condition.

The exemplary method 600 may, at step 610, comprise determining to present connection point information to a user (e.g., on a display). Step 610 may comprise determining to present connection point information to a user in any of a variety of manners. For example and without limitation, step 610 may comprise determining to present the connection point information in response to a user input requesting such information. Also for example, step 610 may comprise determining to present the connection point information automatically, in response to any of a variety of detected events, some of which were discussed with regard to step 605.

The exemplary method 600 may, at step 620, comprise presenting connection point information to a user (e.g., on a display of the multimode communication device). For example, step 620 may comprise presenting a visual indication of determined connection points.

Various visual indication characteristics were presented previously. For example and without limitation, a visual indication of determined connection points may comprise a list (e.g., an ordered list) of connection points. Also for example, a visual indication of determined connection points may comprise characteristics of any of a variety of textual, color, shading, highlighting, pictorial, graphical, textual or other visual characteristics.

The connection point information may comprise any of a variety of characteristics associated with connection points and/or communication links, non-limiting examples of which were presented previously. For example and without limitation, the connection point information may comprise information related to whether the multimode communication device is already coupled to the connection point or presently attempting to establish a communication link with the connection point. Also for example, the connection point information may comprise information related to whether the multimode communication device is presently capable of communicating with a connection point or configurable to communicate with the connection point. Additionally for example, the connection point information may comprise information related to communication link quality, signal strength, data rate, monetary cost, power consumption, an aggregate metric, related protocol or communication mode information, connection point priority, whether the connection point is a default connection point, user or device access privileges, etc.

In various exemplary scenarios, step 620 may also comprise determining which connection points are available and tailor the presentation of connection point information to those available connection points. Such connection point determination was discussed previously.

The exemplary method 600 may, at step 630, comprise receiving a user input associated with selection of a presented communication point. Step 630 may, for example, comprise receiving such a user input in any of a variety of manners. For example, step 630 may comprise receiving such a user input by receiving the user input through a touch screen, cursor controller and select button, scrolling controller and select button, numeric input or other user input.

The exemplary method 600 may, at step 635, comprise determining whether the user input received at step 630 corresponds to a user command to connect to the selected connection point. If it is determined that the user input received at step 630 corresponds to a user command to connect to the selected connection point, then step 635 directs execution flow of the method 600 to step 640. If it is determined that the user input does not correspond to a user command to connect to the selected connection point, then step 635 directs execution flow of the method 600 to step 645.

The exemplary method 600 may, at step 640, comprise establishing a communication link between the multimode communication device and the connection point selected at step 630. Step 640 may comprise establishing the communication link in any of a variety of manners compatible with the selected connection point. Step 640 may, for example, comprise establishing a communication link with the selected connection point utilizing a default communication protocol. Also for example, step 640 may comprise establishing the communication link by traversing a list of communication protocols corresponding to the selected connection point, attempting to establish the communication link with each protocol until successful. Further for example, step 640 may comprise establishing the communication link by determining a best communication protocol to utilize and then utilizing the best communication protocol to establish the communication link.

The exemplary method 600 may, at step 645, comprise determining whether the user input received at step 630 corresponds to a user command to manage the connection point interface. If it is determined that the user input received at step 630 corresponds to a user command to manage the connection point interface, then step 645 directs execution flow of the exemplary method 600 to step 650. If it is determined that the user input does not correspond to a user command to manage the connection point interface, then step 645 directs execution flow of the exemplary method 600 to step 695.

The exemplary method 600 may, at step 650, comprise presenting connection point information to a user. Such connection point information was generally discussed previously. Such connection point information may, for example and without limitation, comprise information of one or more communication modes or protocols associated with the connection point.

The exemplary method 600 may, at step 660, comprise interacting with the user to manage the connection point interface. Such interaction may, for example and without limitation, comprise providing for user selection of a protocol (or, *e.g.,* a sequence of protocols) to utilize for connecting with the selected connection point. Such interaction may also, for example, comprise interacting with the user to manage the display of connection point information.

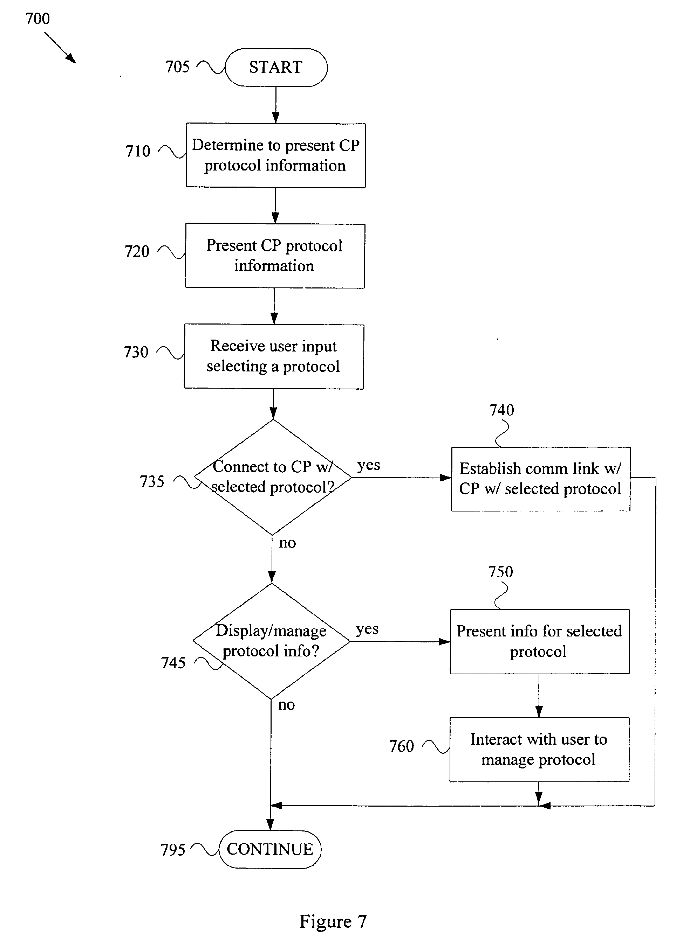

The exemplary method 600 may, at step 695, comprise performing any of a variety of continued processing. Such continued processing may, for example, share any or all characteristics with the exemplary methods 700, 800 illustrated in Figures 7-8 and discussed below. Such continued processing might also, for example, comprise returning execution flow of the exemplary method 600 back to any of the previously discussed steps.

Figure 7 is a diagram illustrating a second exemplary method 700 for managing connectivity of a multimode communication system, in accordance with various aspects of the present invention. The exemplary method 700 may, for example and without limitation, share any or all characteristics with the exemplary method 600 illustrated in Figure 6 and discussed previously (albeit, with respect to communication protocols and related information).

For example, analogous to exemplary steps 610-630 discussed previously, steps 710-730 may comprise determining to present protocol information associated with one or more connection points, presenting such protocol information, and receiving a user input selecting one of the presented protocols. Various characteristics of protocol information and protocol information presentation (e.g., visual indications of protocol information) were discussed previously.

The exemplary method 700 may, at step 735, comprise determining whether the user input received at step 730 corresponds to a user command to connect to a selected connection point utilizing the selected communication protocol. If it is determined that the user input received at step 730 corresponds to a user command to connect using the selected communication protocol, then step 735 comprises directing execution flow of the exemplary method 700 to step 740. If it is determined that the user input does not correspond to a user command to connect using the selected communication protocol, then step 735 comprises directing execution flow of the method 700 to step 745.

The exemplary method 700 may, at step 740, comprise establishing a communication link with a connection point utilizing the protocol selected at step 730. Step 740 may comprise establishing the communication link in any of a variety of manners compatible with the selected protocol. Step 740 may, for example, comprise establishing a communication link with a selected connection point utilizing the selected communication protocol. Also for example, step 740 may comprise establishing the communication link by traversing a list of communication protocols corresponding to the selected connection point (e.g., starting with the selected protocol), attempting to establish the communication link utilizing each protocol until successful.

The exemplary method 700 may, at step 745, comprise determining whether the user input received at step 730 corresponds to a user command to manage the selected communication protocol. If it is determined that the user input received at step 730 corresponds to a user command to manage the selected communication protocol, then step 745 comprises directing execution flow of the exemplary method 700 to step 750. If it is determined that the user input does not correspond to a user command to manage the selected communication protocol, then step 745 comprises directing execution flow of the exemplary method 700 to step 795.

The exemplary method 700 may, at step 750, comprise presenting communication protocol information to the user. Various characteristics of such communication protocol information were generally discussed previously. Such communication protocol information may, for example and without limitation, comprise information of one or more protocol characteristics associated with the selected protocol.

The exemplary method 700 may, at step 760, comprise interacting with the user to manage the communication protocol(s). Such interaction may, for example and without limitation, comprise providing for user selection of various protocol characteristics to utilize for connecting with a selected connection point utilizing the selected protocol. Such interaction may also, for example, comprise interacting with the user to manage the display of protocol information.

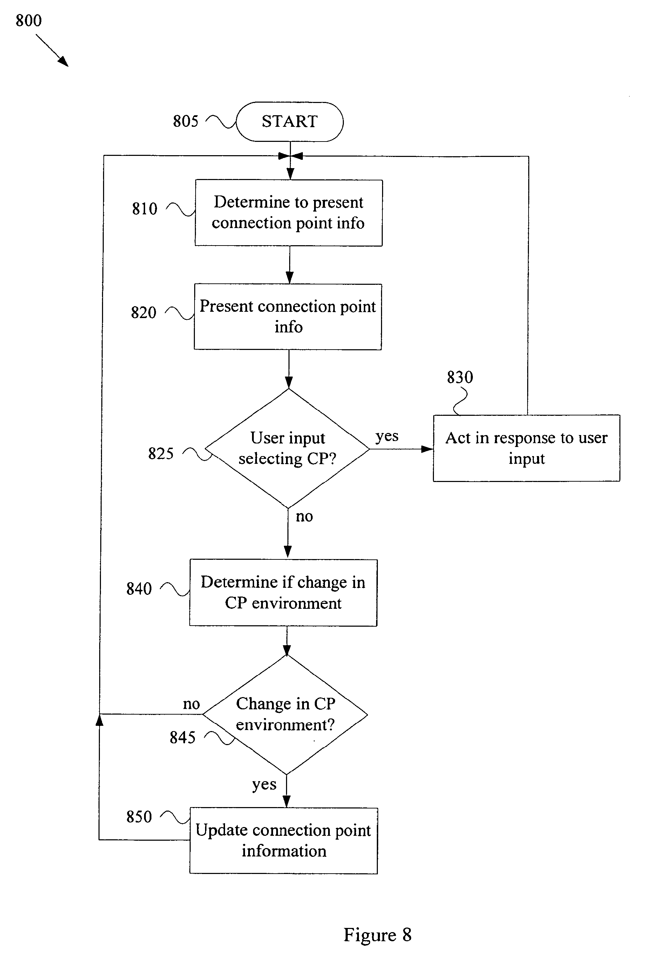

The exemplary method 700 may, at step 795, comprise performing any of a variety of types of continued processing. Such continued processing may, for example, share any or all characteristics with the exemplary methods 600, 800 illustrated in Figures 6 and 8. Such continued processing might also, for example, comprise returning execution flow of the exemplary method 700 back to any of the previously discussed steps.

Figure 8 is a diagram illustrating a third exemplary method 800 for managing connectivity of a multimode communication system, in accordance with various aspects of the present invention.

The exemplary method 800 may, at steps 810 and 820, comprise determining to present connection point information and presenting the connection point information (e.g., by presenting visual indications of available connection points and/or characteristics thereof). Steps 810 and 820 may, for example and without limitation, share any or all characteristics with steps 610 and 620 of the exemplary method 600 illustrated in Figure 6 and discussed previously.

The exemplary method 800 may, at step 825, comprise determining if there is a user input selecting a connection point. Non-limiting examples of such user selection of a connection point were presented previously. If step 825 determines that there is a user input selecting a connection point, then step 825 comprises directing execution flow of the exemplary method 800 to step 830. If step 825 determines that there was no user input (*e.g.,* selecting an access point), then step 825 comprises directing execution flow of the exemplary method 800 to step 840.

The exemplary method 800 may, at step 830, comprise acting in response to the user input selecting a connection point. Step 830 may, for example, comprise performing any of a variety of actions related to the selected connection point. Non-limiting examples of such actions (e.g., establishing a communication link with the connection point, terminating communications with the connection point, selecting a protocol associated with the connection point, managing display of connection point information, etc.) were presented previously.

The exemplary method 800 may, at step 840, comprise determining if there is a change in the connection point environment. Such a change may exhibit many characteristics. For example and without limitation, a change in the connection point environment may be associated with movement of a mobile communication device implementing the method 800 to a different geographical location. Also for example, a change in the connection point environment may be associated with the addition of, or the removal of, a connection point. Additionally for example, a change in the connection point environment may be associated with communication link quality, signal power, power consumption, noise, user input, or a change in any measurable characteristic that might be indicative of a change in the general communication environment of the communication device implementing the method 800.

Further for example, though not explicitly illustrated in step 840, step 840 may also comprise determining that there are other conditions indicating that connection point information should be updated. Various non-limiting examples of such conditions were presented previously (e.g., timer expiration, schedule, user input, etc.).

If step 840 determines that there may have been a change in the connection point environment, then step 840 may comprise directing execution flow of the exemplary method 800 to step 850. If step 840 determines that there has been no change in the connection point environment, then step 840 may comprise looping execution flow of the exemplary method 800 (e.g., back up to step 810 or other step).

The exemplary method 800 may, at step 850, comprise re-determining connection point information (e.g., for subsequent presentation at step 820). Various non-limiting examples of connection point determination were presented previously. For example and without limitation, step 850 may comprise transmitting beacon messages and receiving/analyzing responses, receiving and analyzing beacon messages, communicating with other devices, interfacing with databases, etc.

The exemplary methods 600, 700, 800 illustrated in Figures 6-8 were presented to provide non-limiting examples of various aspects of the present invention. Accordingly, the scope of various aspects of the present invention should not be limited by specific characteristics of the exemplary methods 600, 700, 800.

In summary, various aspects of the present invention provide a system and method providing connection point and/or communication profile management in a communication system. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A multimode communication device comprising:
a display;
at least one module adapted to:
determine available connection points; and
present a visual indication of the determined connection points on the display; and
a user interface adapted to receive a user input associated with a selection of a presented connection point.

2. The multimode communication device of claim 1, wherein the at least one module is further adapted to:
re-determine available connection points in response to an event; and
present an updated visual indication of the re-determined connection points.

3. The multimode communication device of claim 1, wherein the visual indication of the determined connection points indicates one or more connection point characteristics.

4. The multimode communication device of claim 1, wherein the visual indication of the determined connection points indicates whether the multimode communication device is at least one of:
presently communicatively coupled to the determined connection points; and
presently attempting to establish a communication link with the determined connection points.

5. The multimode communication device of claim 1, wherein the visual indication of the determined connection points indicates whether the multimode communication device is presently capable of communicating with the determined connection points.

6. The multimode communication device of claim 1, wherein the visual indication of the determined connection points indicates communication link quality associated with the determined connection points.

7. A method for managing communication of a multimode communication device, the method comprising:
determining connection points available for communication with the multimode communication device;
presenting a visual indication of the determined connection points on a display; and
receiving user input associated with a selection of a presented connection point.

8. The method of claim 7, wherein the visual indication of a determined connection point indicates one or more connection point characteristics.

9. The method of claim 7, further comprising, in response to the received user input, attempting to establish a communication link between the multimode communication device and the selected connection point.

10. The method of claim 7, further comprising, in response to the received user input, presenting information associated with the selected connection point on the display.
